# EUROPÄISCHE PATENTSCHRIFT

(11) **EP 3 033 708 B1**
(45) Veröffentlichungstag und Bekanntmachung des Hinweises auf die Patenterteilung: **21.08.2019**
(21) Anmeldenummer: 14761562.9
(22) Anmeldetag: 14.07.2014
(51) Int. Cl.: G06F 21/31, G06Q 30/06

(54) **VERFAHREN ZUM AUSWERTEN EINES DOKUMENTS**
METHOD FOR EVALUATING A DOCUMENT
PROCÉDÉ D'ÉVALUATION D'UN DOCUMENT

(30) Priorität: 12.08.2013 DE 102013108713
(43) Veröffentlichungstag der Anmeldung: 22.06.2016
(73) Patentinhaber: WebID Solutions GmbH, 10117 Berlin (DE)
(72) Erfinder: FÜRST, Franz Thomas, 42659 Solingen (DE); KAISER, Tim-Markus, 10557 Berlin (DE); JORGA, Frank Stefan, 22767 Hamburg (DE)
(74) Vertreter: Bittner, Thomas L.
(86) Internationale Anmeldenummer: PCT/DE2014/100253
(87) Internationale Veröffentlichungsnummer: WO 2015/039646

(56) Entgegenhaltungen:
- WO-A2-2006/076696
- DE-A1-102009 022 381
- US-A1- 2012 030 108
- US-B1- 7 734 779

## Beschreibung

Die Erfindung betrifft ein Verfahren zum Auswerten eines Dokuments.

### Hintergrund

Bei einigen Geschäftsvorgängen kann es erforderlich sein, beispielsweise aufgrund gesetzlicher Bestimmungen, eine Identität eines Nutzers und / oder ein Alter des Nutzers zu verifizieren. In der Vergangenheit war es hierzu beispielsweise üblich, dass der Nutzer seine Identität gegenüber einem Mitarbeiter der Post nachweist, indem der Mitarbeiter den Personalausweis des Nutzers in Augenschein nimmt und prüft. Anschließend wurde auf dem Postweg ein Dokument versandt, mit dem die Identität des Nutzers bestätigt wurde. Dieses Verfahren ist für den Nutzer sehr zeitaufwendig, da es immer den Besuch einer Filiale der Post voraussetzt. Aufgrund dessen hat dieses Verfahren eine hohe Abbruchrate.

Aus dem Dokument DE 10 2009 022 381 A1 ist ein Verfahren zur webbasierten Personenidentifikation bekannt. Hierbei werden über das Web (Internet) erfasste personenbezogene Daten eines Nutzers erfasst. Diese Daten werden zur Identifikation des Nutzers mit Daten aus einer Referenzdatenbank abgeglichen. Anschließend wird dem Nutzer ein Autorisierungscode übersandt, die dieser dann zur Authentifizierung verwenden kann. Nachteilig hierbei ist, dass zum Erfassen der Referenzdaten wenigstens eine persönliche Identifizierung des Nutzers erforderlich ist. Für die persönliche Identifizierung des Nutzers kann auf das oben erwähnte Verfahren der Post zurückgegriffen werden. Der Nutzer ist also wiederum gezwungen, mindestens einmal eine Postfiliale aufzusuchen.

Ein Verfahren und ein System zum Auswerten von Dokumenten sind in dem Dokument US 2003 / 0139994 A1 offenbart. Ein Nutzer kann einen Ausweis oder einen Führerschein in die Vorrichtung einlegen. Mittels einer Texterkennung werden persönliche Daten des Nutzers von dem eingelegten Dokument erfasst. Hierbei kann auch eine Unterschrift des Nutzers von dem Dokument erfasst und mit einer anderen Unterschrift verglichen werden, um eine Übereinstimmung festzustellen. Der Nutzer muss hierbei die Vorrichtung nutzen, die beispielsweise an Banken aufgestellt ist.

Das Dokument US 7,734,779 B1 offenbart ein Verfahren zum Bereitstellen eines Passworts für einen Nutzer in einem Netzwerk. Bevor das Passwort bereitgestellt wird, kann vorgesehen sein, eine Identität des Nutzers zu prüfen. Hierfür kann ein Ausweis eines Benutzers mittels Videoübertragung an einen Agenten bereitgestellt werden, welcher das Ausweisdokument prüft und mit einer Abbildung des Benutzers vergleicht.

### Zusammenfassung

Aufgabe ist es, ein Verfahren zum Auswerten von Dokumenten anzugeben, dass für einen Nutzer schnell, einfach und sicher zu verwenden ist. Insbesondere sollen unnötige Wege des Nutzers vermieden werden.

Diese Aufgabe wird durch das Verfahren nach dem unabhängigen Anspruch 1 gelöst. Vorteilhafte Ausführungsformen sind Gegenstand von abhängigen Ansprüchen.

Nach einem Aspekt ist ein Verfahren zum Auswerten eines Dokuments nach Anspruch 1 vorgesehen.

In einer weiteren Ausführungsform kann das Verfahren weiterhin folgende Schritte umfassen, welche wahlweise nach dem Erfassen der Vorgangsidentifikationsnummer ausgeführt werden: Übermitteln der Vorgangsidentifikationsnummer von der ersten Datenverarbeitungseinrichtung an die vierte Datenverarbeitungseinrichtung und Übermitteln der Nutzerdaten von der vierten Datenverarbeitungseinrichtung an die erste Datenverarbeitungseinrichtung in Erwiderung auf den Empfang der Vorgangsidentifikationsnummer.

Das Verfahren kann beispielsweise in ein Verfahren eingebunden sein, welches eine Identifikation oder Überprüfung eines Nutzers erfordert. Es kann vorgesehen sein, dass ein Nutzer auf der Webseite eines Anbieters zu einem Vertragsabschluss kommen möchte. Zum Vollzug der Vereinbarung kann eine Überprüfung des Nutzers erforderlich sein, beispielsweise aufgrund gesetzlicher Bestimmungen. Die Überprüfung kann beispielsweise die Identität des Nutzers und / oder dessen Alter betreffen. Bei dem Anbieter kann es sich um eine Bank handeln, bei der beispielsweise ein Konto eröffnet werden soll, um einen Händler, der Ware verkauft, die unter das Jugendschutzgesetz fällt, oder einen anderen Dienstleister (z.B. Online-Gaming, Wettbüro), der es erfordert, dass beispielsweise die Volljährigkeit des Nutzers vor Vertragsschluss geprüft wird.

Die Webseite des Anbieters kann mittels einer dritten Datenverarbeitungseinrichtung zur Verfügung gestellt werden. Der Nutzer kann zum Beispiel mittels der zweiten Datenverarbeitungseinrichtung auf die Webseite zugreifen und mit dieser interagieren. Hierfür kann der Nutzer beispielsweise einen Webbrowser (kurz: Browser) verwenden, der auf der zweiten Datenverarbeitungseinrichtung installiert ist. Beispielsweise kann der Nutzer Nutzerdaten in ein Formular auf der Webseite des Anbieters eintragen. Alternativ können bereits Nutzerdaten bei dem Anbieter hinterlegt sein. In diesem Fall kann sich der Nutzer bei der dritten Datenverarbeitungseinrichtung mittels einer Nutzerkennung anmelden (z.B. Benutzername und Passwort), sodass die bestehenden Nutzerdaten verwendet werden. Wenn vor Vertragsabschluss eine Überprüfung der Identität und / oder des Alters erforderlich ist, kann diese Überprüfung von einem Dienstleister zur Verfügung gestellt werden. Auf der Webseite des Anbieters kann beispielsweise eine Schaltfläche (Button) angezeigt werden, mittels dem die Überprüfung gestartet wird.

Nach dem Aktivieren der Schaltfläche können die Nutzerdaten von der dritten Datenverarbeitungseinrichtung an eine vierte Datenverarbeitungseinrichtung übertragen werden, die von dem Dienstleister betrieben wird. Die vierte Datenverarbeitungseinrichtung kann mit einer Datenbank gekoppelt sein, beispielsweise in der Art eines CRM-Systems (*CRM* - *Customer Relationship Management*). Die Übertragung der Nutzerdaten kann verschlüsselt erfolgen. Die Nutzerdaten werden dann mit in der Datenbank gespeicherten Datensätzen verglichen.

Die Nutzerdaten können beispielsweise folgende Informationen über den Nutzer umfassen und zwar einzeln oder in beliebiger Kombination miteinander: Name (Vorname und / oder Nachname), akademischer Grad, Adresse (Straße, Hausnummer, Postleitzahl und Ort), eine Telefonnummer (Festnetz und / oder Mobilnummer), das Geburtsdatum, den Geburtsort, Land und eine E-Mailadresse. Bei der Eingabe der Nutzerdaten kann vorgesehen sein, dass bestimmte Daten als Pflichtangaben zwingend angegeben werden müssen, beispielsweise Vorname, Nachname, Mobilnummer und / oder E-Mailadresse. Der Vergleich der übermittelten Nutzerdaten mit den Datensätzen kann anhand aller Daten oder anhand von ausgewählten Daten erfolgen. Beispielsweise kann geprüft werden, ob die E-Mailadresse in der Datenbank vorhanden ist. Falls ja, kann hiermit der Nutzer in der Datenbank identifiziert werden. Es kann vorgesehen sein, dass bei dem Vergleich der übermittelten Nutzerdaten mit den Datensätzen aus der Datenbank eine Ähnlichkeitsrelation berücksichtigt wird. Beispielsweise kann der Nutzer identifiziert werden, wenn die übermittelte Adresse von der gespeicherten Adresse abweicht (z.B. aufgrund eines Umzugs), die übrigen Daten aber übereinstimmen. Ein Schwellwert für die Ähnlichkeit der Datensätze kann einstellbar sein.

Falls der Nutzer anhand der übermittelten Daten als bereits von der Datenbank erfasst erkannt wird, wird er als Bestandskunde angesehen. Der weitere Ablauf für einen Bestandskunde wird weiter unten beschrieben.

Wenn die Nutzerdaten nicht mit Daten in der Datenbank des Dienstleisters übereinstimmen, wird der Nutzer als Neukunde angesehen. In diesem Fall kann folgender Ablauf einsetzen.

Es wird eine Bilddatenverbindung zur Übertragung eines Bildsignals zwischen der zweiten Datenverarbeitungseinrichtung und der ersten Datenverarbeitungseinrichtung bereitgestellt. Hierzu ist es erforderlich, dass die zweite Datenverarbeitungseinrichtung eine Bildaufnahmeeinrichtung aufweist. Die Bildaufnahmeeinrichtung kann in die zweite Datenverarbeitungseinrichtung integriert sein oder hieran gekoppelt sein. Die Bildaufnahmeeinrichtung kann beispielsweise eine Webcam, eine (digitale) Videokamera oder ein (digitaler) Fotoapparat sein. Ergänzend kann vorgesehen sein, dass zusammen mit dem Bildsignal auch ein Tonsignal übertragen wird. Hierfür kann die zweite Datenverarbeitungseinrichtung eine Audioaufnahmeeinrichtung aufweisen, beispielsweise ein Mikrofon, das in die zweite Datenverarbeitungseinrichtung integriert oder hieran angeschlossen sein kann. Die Bilddatenverbindung, mit der das Bildsignal und ggf. das Tonsignal übertragen wird, kann verschlüsselt bereitgestellt werden. Die erste Datenverarbeitungseinrichtung kann eine Anzeigeeinrichtung, beispielsweise einen Bildschirm, und / oder eine Tonwiedergabeeinrichtung, beispielsweise einen Lautsprecher, aufweisen.

Es kann vorgesehen sein, dass vor dem Bereitstellen der Bilddatenverbindung geprüft wird, beispielsweise mittels der ersten, der dritten oder der vierten Datenverarbeitungseinrichtung, ob die zweite Datenverarbeitungseinrichtung eine Bildaufnahmeeinrichtung aufweist. Die Prüfung kann beispielsweise mittels Auslesen einer Browserkonfiguration des Browsers erfolgen.

Des Weiteren kann vorgesehen sein, dass vor dem Bereitstellen der Bilddatenverbindung geprüft wird, ob die zweite Datenverarbeitungseinrichtung eine Videosoftware oder eine browserbasierte Videotelefonie zum Bereitstellen der Bilddatenverbindung aufweist. Falls die Prüfung negativ ausfällt, kann ein Hyperlink bereitgestellt werden, mittels dem die Videosoftware heruntergeladen werden kann. Die Prüfung kann mittels der ersten oder der dritten Datenverarbeitungseinrichtung ausgeführt werden. Der Hyperlink kann mittels der ersten oder dritten Datenverarbeitungseinrichtung bereitgestellt werden, beispielsweise auf der Webseite des Anbieters. Beispiele für Videosoftware sind Skype oder Facetime. Alternativ oder ergänzend kann eine vom Anbieter bereitgestellte Videosoftware heruntergeladen werden.

In der ersten Datenverarbeitungseinrichtung wird eine den Nutzerdaten zugeordnete Vorgangsidentifikationsnummer erfasst. Es ist vorgesehen, dass die Vorgangsidentifikationsnummer zuvor mittels der vierten Datenverarbeitungseinrichtung erzeugt wird, beispielsweise nach dem Empfang der Kundendaten von der dritten Datenverarbeitungseinrichtung. Die Vorgangsidentifikationsnummer dient der eindeutigen Kennung des Identifizierungsvorgangs für den Nutzer. Für jeden Identifizierungsvorgang des Nutzers kann jeweils eine eigene, eindeutige Vorgangsidentifikationsnummer erstellt werden. Wenn ein Nutzer beispielsweise bei zwei Banken ein Konto eröffnen möchte, muss er sich bei beiden Banken identifizieren. Für jede Identifizierung wird jeweils eine eigene Vorgangsidentifikationsnummer erstellt, die den Nutzerdaten zugeordnet ist.

Die Vorgangsidentifikationsnummer wird von der vierten Datenverarbeitungseinrichtung an die zweite Datenverarbeitungseinrichtung übermittelt, beispielsweise mittels E-Mail oder SMS (SMS - Short Message Service). Es kann ebenfalls vorgesehen sein, dass die Vorgangsidentifikationsnummer im Browser der zweiten Datenverarbeitungseinrichtung dargestellt wird. Der Nutzer kann die Vorgangsidentifikationsnummer beispielsweise mittels der Bilddatenverbindung an einen die erste Datenverarbeitungseinrichtung bedienenden Agenten übermitteln. Alternativ kann vorgesehen sein, dass der Nutzer dem Agenten die Vorgangsidentifikationsnummer ansagt, die Übertragung also akustisch erfolgt. Der Agent gibt dann die Vorgangsidentifikationsnummer mittels einer Eingabeeinrichtung in die erste Datenverarbeitungseinrichtung ein. Alternativ kann die Vorgangsidentifikationsnummer von der zweiten Datenverarbeitungseinrichtung an die erste Datenverarbeitungseinrichtung übermittelt werden, beispielsweise mittels E-Mail, SMS oder einem elektronischen Formular, in welches der Nutzer die Vorgangsidentifikationsnummer zum Übertragen eingibt. Als weitere Alternative kann die Vorgangsidentifikationsnummer direkt von der vierten Datenverarbeitungseinrichtung an die erste Datenverarbeitungseinrichtung übertragen werden.

Die Vorgangsidentifikationsnummer kann beispielsweise eine 9-stellige Zahl sein. Alternativ kann auch ein Mix von alphanumerischen Zeichen vorgesehen sein. Die Vorgangsidentifikationsnummer kann eine zufällig erstellte Zahl, Zeichen, Zahlenfolge und / oder Zeichenfolge umfassen. Es kann vorgesehen sein, dass die Vorgangsidentifikationsnummer ausgehend von einer früheren Vorgangsidentifikationsnummer gebildet wird. Hierfür kann zusätzlich zu der früheren Vorgangsidentifikationsnummer eine Zufallszahl in die Vorgangsidentifikationsnummer aufgenommen werden. Stellen zwischen der früheren Vorgangsidentifikationsnummer und der Zufallszahl werden mit Nullen aufgefüllt. Schließlich kann die letzte Ziffer mit einer beliebigen anderen Ziffer vertauscht werden. Es ist vorgesehen, dass die Vorgangsidentifikationsnummer manipulationssicher ist. Es soll zu Kontrollzwecken sichergestellt sein, dass die Vorgangsidentifikationsnummer einer Identifikation eindeutig zugeordnet ist, sodass diese zu einem späteren Zeitpunkt nachvollzogen werden kann. Des Weiteren kann vorgesehen sein, dass die Vorgangsidentifikationsnummer nur für einen begrenzten Zeitraum gültig ist, beispielsweise eine Stunde. Nach Ablauf der Zeit wird die Vorgangsidentifikationsnummer ungültig und kann nicht mehr verwendet werden.

Nach dem Erfassen der Vorgangsidentifikationsnummer (z.B. durch Eingeben) kann diese von der ersten Datenverarbeitungseinrichtung an die vierte Datenverarbeitungseinrichtung übermitteln werden. In Erwiderung hierauf kann die vierte Datenverarbeitungseinrichtung die der Vorgangsidentifikationsnummer zugeordneten Nutzerdaten an die erste Datenverarbeitungseinrichtung übermitteln. Die Übermittlung kann verschlüsselt erfolgen. Es kann vorgesehen sein, dass die übermittelten Nutzerdaten mittels der ersten Datenverarbeitungseinrichtung nicht veränderbar sind. Hierdurch sind Manipulationen der Nutzerdaten durch den Agenten ausgeschlossen. In einer anderen Ausführungsform können die Nutzerdaten mittels der ersten Datenverarbeitungseinrichtung veränderbar sein. Dies ermöglicht eine Korrektur oder Ergänzung der bestehenden Nutzerdaten.

Mittels der Bildaufnahmeeinrichtung der zweiten Datenverarbeitungseinrichtung wird ein Dokument erfasst. Eine Abbildung des Dokuments wird an die erste Datenverarbeitungseinrichtung übertragen. Hier kann die Abbildung des Dokuments mittels einer Anzeigeeinrichtung dargestellt werden. Es kann vorgesehen sein, dass der Agent dem Nutzer Anweisungen betreffend eine bestimmte Positionierung des Dokuments gibt, damit dieses von der Bildaufnahmeeinrichtung ausreichend erfasst wird. Alternativ oder ergänzend kann vorgesehen sein, dass auf einer an die zweite Datenverarbeitungseinrichtung gekoppelten Anzeigeeinrichtung Hilfslinien dargestellt werden, die eine geeignete Position des Dokuments anzeigen. Die Hilfslinien können von der ersten Datenverarbeitungseinrichtung erzeugt und von dieser an die zweite Datenverarbeitungseinrichtung übertragen werden.

Das Dokument wird ausgewertet. Die Auswertung kann beispielsweise eine Prüfung der Echtheit des Dokuments umfassen und / oder eine Prüfung der Echtheit einer Unterschrift auf dem Dokument. Es kann vorgesehen sein, dass das Dokument automatisch mittels der ersten Datenverarbeitungseinrichtung ausgewertet wird.

Im Zusammenhang mit dem als Neukunden eingestuften Nutzer kann die Auswertung des Dokuments durchgeführt werden, um ein Benutzerprofil für den Nutzer anzulegen, damit dieser bei späteren Handlungen als Bestandskunde erkannt wird. Für das Erfassen des Nutzers als Bestandskunden kann es erforderlich sein die Identität des Nutzers zu verifizieren, beispielsweise aufgrund gesetzlicher Bestimmungen. Es kann vorgesehen sein, dass als Dokument ein Personenidentifikationsdokument ausgewertet wird, beispielsweise ein Personalausweis, ein Reisepass oder ein Führerschein.

Schließlich wird das Ergebnis der Auswertung zusammen mit der Vorgangsidentifikationsnummer und den Nutzerdaten in einer Datenbank gespeichert. Hierfür können die Daten von der ersten Datenverarbeitungseinrichtung an die vierte Datenverarbeitungseinrichtung übertragen und in der hieran gekoppelten Datenbank gespeichert werden. Es kann vorgesehen sein, dass das Bildsignal und / oder das Tonsignal wenigstens teilweise oder auch vollständig in der Datenbank gespeichert werden.

Eine Identitätsprüfung des Nutzers kann anhand des Personenidentifikationsdokumentes durchgeführt werden. Beispielsweise kann der Agent die übermittelten Nutzerdaten mit den Angaben auf dem Personenidentifikationsdokument vergleichen. Hierfür können die Nutzerdaten auf einer Bildschirmmaske dargestellt werden, beispielsweise in einem zweispaltigen Formular. Eine Spalte umfasst die übertragenen Nutzerdaten, eine andere Spalte ist zunächst leer. Während der Prüfung des Personenidentifikationsdokuments können die geprüften und bestätigten Nutzerdaten in die andere Spalte übertragen werden, um die erfolgreiche Prüfung anzuzeigen. Für die Übertragung der Daten kann jeweils eine Schaltfläche vorgesehen sein. Leere Felder der Maske können hervorgehoben werden, beispielsweise mittels einer farblichen Markierung. Fehlende Daten können gegebenenfalls von dem Agenten ergänzt werden. Ergänzend kann die Ansicht des Nutzers mit einem Foto auf dem Personenidentifikationsdokument verglichen werden. Es kann eine Prüfliste zur Verfügung gestellt werden, welche die zu prüfenden Punkte auflistet. Des Weiteren kann vorgesehen sein, dass Sicherheitsmerkmale des Personenidentifikationsdokuments ausgewertet werden, um die Echtheit des Personenidentifikationsdokuments zu prüfen. Beispielsweise können Sicherheitsmerkmale in Form von Wasserzeichen und / oder Strukturmustern ausgewertet werden.

Es kann vorgesehen sein, dass in der Datenbank folgende Informationen zu dem Agenten gespeichert werden: Name eines Callcenters, in dem der Agent tätig ist, Ort, Telefonnummer, Name des Agenten (Vorname, Nachname), eine Agentenkennnummer, eine Callcenter-Kennnummer und eine beliebige Kombination hiervon.

Die Identitätsprüfung kann alternativ automatisch mittels der ersten Datenverarbeitungseinrichtung ausgeführt werden. Die erste Datenverarbeitungseinrichtung kann des Weiteren eingerichtet sein, Sicherheitsmerkmale des Personenidentifikationsdokuments zu prüfen. Es kann vorgesehen sein, dass eine Abbildung des Personenidentifikationsdokuments erfasst und abgespeichert wird. Die Speicherung kann in der ersten Datenverarbeitungseinrichtung erfolgen, beispielsweise als Zwischenspeicherung, oder in der Datenbank, die an die vierte Datenverarbeitungseinrichtung gekoppelt ist. Die Abbildung kann eine Vorderseite und / oder eine Rückseite des Personenidentifikationsdokuments umfassen. Des Weiteren kann mittels der Bildaufnahmeeinrichtung eine Abbildung des Nutzers erfasst und gegebenenfalls abgespeichert werden. Es kann vorsehen sein, dass aus der Abbildung des Personenidentifikationsdokuments ein Foto ausgelesen und in einer separaten Fotoabbildung abgespeichert wird.

Die Abbildung des Nutzers und die Fotoabbildung können normiert werden, beispielsweise nach der Größe, der Farbintensität und / oder der Ausrichtung. Es kann vorgesehen sein, dass die Anzahl der erforderlichen Normierungsschritte für die jeweilige Abbildung gespeichert wird. Des Weiteren kann ein Speichern der normierten Abbildung des Nutzers und / oder der normierten Fotoabbildung erfolgen.

Es kann weiterhin vorgesehen sein, dass die beiden Abbildungen jeweils in eine Abbildung mit reduzierten Farben umgewandelt werden, beispielsweise in eine grau-schattierte Abbildung oder eine schwarz-weiß Abbildung. Der Hintergrund im Bereich um den Kopf herum kann weiß gefärbt werden. Die Anzahl der Anpassungsschritte für die beiden Abbildungen kann gespeichert werden. Ebenso können die umgewandelte Abbildung des Nutzers und / oder die umgewandelte Fotoabbildung abgespeichert werden.

Die folgenden Parameter können entweder einzeln oder in beliebiger Kombination aus den beiden Abbildungen (in jeweils ursprünglicher, normierter oder umgewandelter Form) ermittelt werden: horizontaler Außenabstand der Ohren, horizontaler Außenabstand der Augen, horizontaler Außenabstand von Naris zu Naris (Breite der Nase), horizontaler Außenabstand des Halses (Breite des Halses), horizontaler Außenabstand des Gesichts unterhalb der Ohren und horizontaler Außenabstand der Augenbrauen. Es kann vorgesehen sein, die ermittelten Abstände miteinander zu vergleichen, um die Übereinstimmung zu prüfen. Die Abbildungen können als identisch angesehen werden, wenn maximal ein Element nicht ermittelt werden konnte (beispielsweise weil Haare die Ohren verdecken) und kein Element eine Abweichung von mehr als 5% aufweist. Ergänzend kann vorgesehen sein, einen akzeptablen Grad von Abweichungen dynamisch einzustellen, beispielsweise im Bereich von 1% bis 20%. Hiermit kann auf unterschiedliche Sicherheitsanforderungen eingegangen werden. Des Weiteren kann eine Ähnlichkeitsbewertung der Gesichtsform und gegebenenfalls weiterer Details vorgesehen sein.

Des Weiteren kann vorgesehen sein, dass mittels der ersten Datenverarbeitungseinrichtung Datenfelder aus der Abbildung des Personenidentifikationsdokuments ausgelesen werden. Die ausgelesenen Daten können beispielsweise einen Namen (Vorname(n) und / oder Nachname), einen akademischen Grad, ein Geburtsdatum, einen Geburtsort, eine Staatsangehörigkeit, ein Gültigkeitsdatum des Personenidentifikationsdokuments, eine Identifikationsnummer des Personenidentifikationsdokuments, eine Zugangsnummer, eine Unterschrift und eine beliebige Kombination hiervon umfassen. Die vorgenannten Daten können beispielsweise auf der Vorderseite des Personenidentifikationsdokuments angegeben sein. Alternativ oder ergänzend können die folgenden Daten von der ersten Datenverarbeitungseinrichtung erfasst werden: eine Adresse (Straße, Hausnummer, Ort und / oder Postleitzahl), eine Augenfarbe, eine Körpergröße, ein Ausstellungsdatum des Personenidentifikationsdokuments, eine Ausstellungsbehörde, ein Künstlername und eine beliebige Kombination hiervon. Diese Daten können beispielsweise auf der Rückseite des Personenidentifikationsdokuments angegeben sein.

Weiterhin kann vorgesehen sein, dass ein zweizeiliger maschinenlesbarer Bereich auf der Vorderseite eines alten deutschen Personalausweises (ausgegeben bis 30. Oktober 2010) bzw. ein dreizeiliger maschinenlesbarer Bereich auf der Rückseite eines neuen deutschen Personalausweises (ausgegeben ab 1. November 2010) zumindest teilweise ausgelesen wird. Die maschinenlesbaren Bereiche können auch vollständig erfasst werden. Für die maschinenlesbaren Bereiche wird in der Regel eine nichtproportionale Schriftart verwendet. Jedes Zeichen hat die gleiche Laufweite. Anstelle von Leerzeichen wird das Symbol "<" verwendet. Jede Stelle des maschinenlesbaren Bereichs ist somit mit einem Zeichen belegt. Die erste Datenverarbeitungseinrichtung kann konfiguriert sein, einen alten bzw. neuen deutschen Personalausweis zu erkennen.

Es kann vorgesehen sein, dass für die erfassten Daten eine Kontrolle erfolgt, beispielsweise eine Formatkontrolle und / oder eine Logikkontrolle. Beispielsweise kann geprüft werden, ob das Geburtsdatum im Format TT.MM.JJ (T - Tag, M - Monat, J - Jahr) angegeben ist. Bei Prüfung eines deutschen Personalausweises ist als Staatsangehörigkeit nur "deutsch" möglich. Ergänzend kann eine Prüfung ausländischer Ausweisdokumente vorgesehen sein. Hier ist als Staatsangehörigkeit dann jeweils nur die Staatsangehörigkeit des ausstellenden Landes möglich. Des Weiteren kann eine Kontrolle einer Prüfnummer des Personenidentifikationsdokuments erfolgen. Für deutsche Personalausweise ist beispielsweise ein Algorithmus zum Bilden einer Prüfsumme bekannt. Anhand der erfassten (ggf. maschinenlesbaren) Daten kann mittels der ersten Datenverarbeitungseinrichtung geprüft werden, ob die Prüfsumme korrekt ist. Eine weitere Kontrolle kann einen Vergleich des Gültigkeitsdatums mit einem aktuellen Datum umfassen. Die Prüfung kann in folgenden Fällen als fehlgeschlagen eingestuft werden: das Personenidentifikationsdokument ist abgelaufen, die Formatkontrolle und / oder die Logikkontrolle führen zu einem negativen Ergebnis, die Prüfsumme ist falsch, mehr als drei Datenfelder können nicht ausgelesen werden. Es kann vorgesehen, dass bereits bei Vorliegen eines der vorgenannten Fälle die Prüfung als fehlgeschlagen angesehen wird. Es kann vorgesehen sein, dass das Verfahren zur Auswertung des Personenidentifikationsdokuments (Identitätsprüfung) neu gestartet wird, wenn ein vorhergehender Durchlauf nicht erfolgreich war. Der Neustart kann von dem Agenten initiiert oder automatisch von der ersten Datenverarbeitungseinrichtung eingeleitet werden.

Es kann weiterhin vorgesehen sein, dass Sicherheitsmerkmale eines deutschen Personalausweises mittels der ersten Datenverarbeitungseinrichtung erfasst und ausgewertet werden. Hierfür kann eine Auswertung der folgenden Sicherheitsmerkmale vorgesehen sein: eine Struktur im Hintergrund eines Fotos, eine horizontale Struktur unter dem Foto, eine Struktur im mittigen Bereich am rechten Rand, eine Struktur am oberen Rand (vom oberen Rand bis etwa 1,5 cm darunter) und eine beliebige Kombination hiervon. Die vorgenannten Sicherheitsmerkmale können auch als offizielle Sicherheitsmerkmale bezeichnet werden. Die Auswertung der Sicherheitsmerkmale kann beispielsweise durch einen Vergleich mit gespeicherten Standardvorlagen für die Sicherheitsmerkmale erfolgen. Es kann eine Ähnlichkeitsbewertung der erfassten Sicherheitsmerkmale mit den gespeicherten Standardvorlagen durchgeführt werden. Es kann vorgesehen sein, dass die Prüfung der Sicherheitsmerkmale nur als positiv eingestuft wird, wenn alle erfassten, bevorzugt alle oben aufgeführten, Sicherheitsmerkmale den Vergleich mit den jeweiligen Standardvorlagen bestehen.

Alternativ oder ergänzend kann das Erfassen und Auswerten von weiteren Sicherheitsmerkmalen eines deutschen Personalausweises mittels der ersten Datenverarbeitungseinrichtung vorgesehen sein. Die erfassten weiteren Sicherheitsmerkmale können mit gespeicherten Sollwerten verglichen werden. Die Sollwerte können beispielsweise in der Datenbank gespeichert sein, die mit der vierten Datenverarbeitungseinrichtung gekoppelt ist. Die weiteren Sicherheitsmerkmale können für einen alten deutschen Personalausweis folgende Merkmale umfassen: Abstand vom unteren Rand bis zu einer unteren schwarzen Linie auf der Vorderseite, Abstand zwischen zwei schwarzen Linien auf der Vorderseite, Abstand vom oberen Rand des maschinenlesbaren Bereichs bis zum unteren Rand des Fotos auf der Vorderseite, die Gesamthöhe und / oder die Gesamtbreite des bedruckten Bereichs auf der Vorderseite, Abstand vom rechten Rand bis zum Beginn des bedruckten Bereichs auf der Rückseite, Abstand vom unteren Rand bis zum Beginn des Textbeginn des Nachnamens, Abstand zwischen dem Nachnamen und dem Ausstellungsdatum auf der Rückseite und eine beliebige Kombination hiervon. Der automatische Vergleich kann beispielsweise als erfolgreich eingestuft werden, wenn wenigstens 6 der oben genannten weiteren Sicherheitsmerkmale bestimmt werden konnten und die Abweichung beim Vergleich mit den jeweiligen Sollwerten jeweils kleiner als 5% ist. Es kann ebenfalls eine dynamische Anpassung der Abweichung vorgesehen sein.

Die weiteren Sicherheitsmerkmale können für einen neuen deutschen Personalausweis (ausgegeben seit 01.11.2010) folgende Merkmale umfassen: Abstand vom unteren Rand bis zum Beginn des unteren Rands des aufgedruckten Fotos auf der Vorderseite, Abstand zwischen dem oberen Rand bis zum Beginn der Personalausweisnummer auf der Vorderseite, Abstand vom oberen Rand bis zum oberen Rand des Fotos auf der Vorderseite, die Gesamthöhe und / oder die Gesamtbreite des bedruckten Bereichs auf der Vorderseite, Abstand vom linken Rand bis zum Beginn des bedruckten Bereichs auf der Rückseite, Abstand vom unteren Rand bis zum Beginn des maschinenlesbaren Bereichs, Höhe des maschinenlesbaren Bereichs auf der Rückseite, Gesamtbreite des maschinenlesbaren Bereichs auf der Rückseite und eine beliebige Kombination hiervon. Der automatische Vergleich kann beispielsweise als erfolgreich eingestuft werden, wenn wenigstens 6 der oben genannten weiteren Sicherheitsmerkmale bestimmt werden konnten und die Abweichung beim Vergleich mit den jeweiligen Sollwerten jeweils kleiner als 5% ist. Es kann ebenfalls eine dynamische Anpassung der Abweichung vorgesehen sein.

Eine Überprüfung der Sicherheitsmerkmale und / oder der weiteren Sicherheitsmerkmale kann alternativ oder ergänzend durch den Agenten erfolgen. Dieser kann dem Nutzer Anweisungen erteilen, wie der Nutzer das Personenidentifikationsdokument (beispielsweise den Personalausweis) vor die Bildaufnahmeeinrichtung halten soll, damit eine Prüfung Sicherheitsmerkmale und / oder der weiteren Sicherheitsmerkmale durch die erste Datenverarbeitungseinrichtung ermöglicht ist und / oder der Agent die Sicherheitsmerkmale und / oder die weiteren Sicherheitsmerkmale verifizieren kann.

Des Weiteren kann vorgesehen sein, dass die Nutzerdaten an eine fünfte Datenverarbeitungseinrichtung übersandt werden. Die fünfte Datenverarbeitungseinrichtung prüft dann, ob die Nutzerdaten zumindest teilweise in einer an die fünfte Datenverarbeitungseinrichtung gekoppelten weiteren Datenbank enthalten sind. Als Ergebnis kann die fünfte Datenverarbeitungseinrichtung die Information, ob die Nutzerdaten in der weiteren Datenbank enthalten sind oder nicht, an die erste Datenverarbeitungseinrichtung übermitteln.

Wenn die Auswertung des Personenidentifikationsdokuments erfolgreich abgeschlossen ist, also die Identität des Nutzers bestätigt wurde, kann dieser als Bestandskunde aufgenommen werden. Die Daten des Nutzers können in der Datenbank abgespeichert werden, wahlweise zusammen mit einer dem Nutzer zugeordneten Nutzerkennnummer. Hierfür kann vorgesehen sein, dass die Nutzerdaten und / oder Daten von der Auswertung des Personenidentifikationsdokuments verschlüsselt und / oder komprimiert von der ersten Datenverarbeitungseinrichtung an die vierte Datenverarbeitungseinrichtung übertragen werden. Es kann vorgesehen sein, dass die übertragenen Daten von der vierten Datenverarbeitungseinrichtung in ein Format konvertiert werden, dass nicht im Klartext lesbar ist. Des Weiteren können die Nutzerdaten und / oder Daten von der Auswertung des Personenidentifikationsdokuments verschlüsselt und / oder komprimiert von der ersten Datenverarbeitungseinrichtung an die dritte Datenverarbeitungseinrichtung übertragen werden. Die Übertragung der Daten kann jeweils beispielsweise mittels POST BASE64 String erfolgen.

Dem Nutzer kann eine elektronische Nachricht über die erfolgreiche Identifikation übersandt werden, beispielsweise per E-Mail und / oder SMS.

Nachdem der Nutzer erfolgreich vom Dienstleister geprüft und / oder identifiziert wurde, kann eine entsprechende Information an die dritte Datenverarbeitungseinrichtung (beispielsweise an die Webseite des Anbieters) übermittelt werden, wahlweise zusammen mit der Vorgangsidentifikationsnummer. Der Nutzer kann anschließend die weiteren Handlungen vollziehen, beispielsweise den Vertrag abschließen. Es kann vorgesehen sein, dass dem erfolgreich geprüften Neukunden eine Transaktionsnummer (TAN) übermittelt wird. Nach Eingabe und Prüfung der TAN kann der Nutzer weitere Handlungen vollziehen. Weitere Details zur TAN sind im Folgenden aufgeführt.

Für Bestandskunden und / oder erfolgreich geprüfte Neukunden (die dann als Bestandskunden aufgenommen wurden) kann vorgesehen sein, dass die Nutzerdaten mit der Datenbank abgeglichen werden. Ergänzend oder alternativ kann vorgesehen sein, dass jedem Bestandskunden jeweils eine Kundenkennnummer zugeordnet ist. Bei Eingabe der Kundenkennnummer durch den Nutzer kann geprüft werden, ob diese bereits in der Datenbank gespeichert ist. Nach erfolgreichem Abgleich der Nutzerdaten und / oder der Kundenkennnummer wird dem Nutzer eine Transaktionsnummer (TAN) übermittelt, beispielsweise per E-Mail, SMS und / oder per Sprachansage mittels Telefon. Die TAN wird in der Datenbank gespeichert, wahlweise zusammen mit der zugeordneten Vorgangsidentifikationsnummer. Nach Eingabe der TAN auf der Webseite des Anbieters erfolgt eine Prüfung, ob die eingegebene TAN mit der gespeicherten TAN übereinstimmt. Bei positivem Prüfergebnis wird der Nutzer als Bestandskunde anerkannt und kann sofort weitere Handlungen auf der Webseite vornehmen. Es kann vorgesehen sein, dass auf der Webseite des Anbieters eine Schaltfläche dargestellt wird, die der Nutzer anklicken kann, um anzugeben, dass er Bestandskunde ist. Dies führt dann direkt zur Prüfung der Nutzerdaten. Es kann weiterhin vorgesehen sein, dass automatisch ermittelt wird, dass der Nutzer Bestandskunde ist, beispielsweise anhand der eingegebenen Nutzerdaten, insbesondere anhand der E-Mailadresse.

Die TAN kann von der vierten Datenverarbeitungseinrichtung erzeugt werden, beispielsweise als 6-stellige Zahl. Es kann vorgesehen sein, dass die TAN nur eine begrenzte Zeit gültig ist, beispielsweise bis zu einer Stunde nach ihrer Erzeugung. Dies wird bei Eingabe der TAN gegebenenfalls geprüft. Des Weiteren kann vorgesehen sein, dass der Nutzer nur eine begrenzte Anzahl von Versuchen zum Eingeben der TAN hat. Die Eingabe einer nicht übereinstimmenden TAN (beispielsweise aufgrund von Tippfehlern) kann auf drei Versuche begrenzt sein. Hierfür kann die vierte Datenverarbeitungseinrichtung konfiguriert sein, die Anzahl der Eingaben der TAN zu zählen und zu prüfen. Die vierte Datenverarbeitungseinrichtung kann des Weiteren eine logische Prüfung der TAN durchführen, zum Beispiel ob diese ein bestimmtes Format aufweist. Es kann weiterhin geprüft werden, ob zu der TAN eine Vorgangsidentifikationsnummer existiert. Es kann vorgesehen sein, dass die TAN nach erfolgreicher Eingabe in der Datenbank gelöscht wird.

In der Datenbank können des Weiteren Anbieterdaten des Anbieters gespeichert werden. Die Anbieterdaten können folgende Informationen umfassen: Vorname, Nachname, Firmenname, Adresse (Straße, Hausnummer, Postleitzahl, Ort), Land, eine Anbieterkennnummer, ein Datum der Anmeldung und eine beliebige Kombination hiervon. Des Weiteren kann gespeichert sein, ob zwischen dem Anbieter und dem Dienstleister ein Vertragsverhältnis in Kraft ist. Beispielsweise kann die Anbieterkennnummer Nutzerdaten zugeordnet werden, die an die dritte Datenverarbeitungseinrichtung übertragen werden.

Des Weiteren kann vorgesehen sein, dass eine Unterschrift auf dem Dokument ausgewertet wird. Hierfür kann die Unterschrift mittels der Bildaufnahmeeinrichtung erfasst werden. Die erste Datenverarbeitungseinrichtung kann konfiguriert sein, die erfasste Unterschrift mit in der Datenbank gespeicherten Unterschriften zu vergleichen, um eine Übereinstimmung zu ermitteln. Für die Übereinstimmung kann eine Ähnlichkeitsrelation verwendet werden, die angibt, wie groß die Abweichung zwischen der erfassten und der gespeicherten Unterschrift sein darf, damit diese als gleich anerkannt werden. Als gespeicherte Unterschrift kann beispielsweise die Unterschrift auf einem Personenidentifikationsdokument verwendet werden, von dem eine Abbildung in der Datenbank gespeichert ist.

Das Verfahren wird mittels mehrerer Datenverarbeitungseinrichtungen ausgeführt. Die Datenverarbeitungseinrichtungen können jeweils beispielsweise einen oder mehrere Prozessoren sowie einen Speicher mit einem flüchtigen (z.B. Arbeitsspeicher) und / oder einem nicht flüchtigen (z.B. Festplatte) Speicherbereich aufweisen. Des Weiteren können die Datenverarbeitungseinrichtungen jeweils Kommunikationseinrichtungen zum Empfangen und / oder Senden von Daten und / oder Datenströmen aufweisen, beispielsweise einen Netzwerkanschluss (*LAN- local area network*), einen Anschluss für ein kabelloses Netzwerk (*WLANwireless local area network*), einen USB-Anschluss (*USB* - *universal serial bus*), einen Bluetooth-Adapter und / oder einen Firewire-Anschluss (IEEE 1394). Die Datenverarbeitungseinrichtungen können jeweils eine Vorrichtung zum Erfassen einer Benutzereingabe aufweisen, beispielsweise eine Tastatur, eine Maus und / oder ein Touchpad. Die Datenverarbeitungseinrichtungen können jeweils mit einer Anzeigeeinrichtung verbunden sein. Alternativ kann jeweils eine Anzeigeeinrichtung in eine der Datenverarbeitungseinrichtungen integriert sein. Die Anzeigeeinrichtung kann einen berührungsempfindlichen Bildschirm (*touch screen*) zum Erfassen einer Benutzereingabe aufweisen. Die Datenverarbeitungseinrichtungen können beispielsweise jeweils als Server, Web-Server, Personalcomputer, Laptop, Tablet-PC oder Smartphone ausgeführt sein.

Es kann eine Vorrichtung oder ein System mit einer ersten Datenverarbeitungseinrichtung, einer zweiten Datenverarbeitungseinrichtung, die eine Bildaufnahmeeinrichtung aufweist, sowie einer Datenbank vorgesehen sein, wobei die Vorrichtung eingerichtet oder geeignet ist, das folgende Verfahren auszuführen:
- Bereitstellen einer Bilddatenverbindung zur Übertragung eines Bildsignals zwischen der zweiten Datenverarbeitungseinrichtung, welche die Bildaufnahmeeinrichtung aufweist, und der ersten Datenverarbeitungseinrichtung,
- Erfassen einer den Nutzerdaten zugeordneten Vorgangsidentifikationsnummer in der ersten Datenverarbeitungseinrichtung,
- Übermitteln von Nutzerdaten an die erste Datenverarbeitungseinrichtung,- Erfassen eines Dokuments mittels der Bildaufnahmeeinrichtung und übertragen einer Abbildung des Dokuments mittels der Bilddatenverbindung an die erste Datenverarbeitungseinrichtung,
- Auswerten des Dokuments und
- Speicher des Ergebnisses der Auswertung mit der Vorgangsidentifikationsnummer und den Nutzerdaten in einer Datenbank.

Im Zusammenhang mit der Vorrichtung gelten die in Verbindung mit dem Verfahren zum Auswerten von Dokumenten gemachten Erläuterungen zu möglichen Ausgestaltungen entsprechend.

### Beschreibung beispielhafter Ausführungsformen

Weitere Ausführungsformen werden im Folgenden unter Bezugnahme auf Figuren einer Zeichnung näher erläutert. Hierbei zeigen:
- Fig. 1: ein Ablaufdiagramm für Überblick zum Verfahren,
- Fig. 2: ein Ablaufdiagramm zum detaillierten Ablauf des Verfahrens,
- Fig. 3: ein Ablaufdiagramm für einen Bestandskunden und
- Fig. 4: ein Ablaufdiagramm für einen Neukunden.

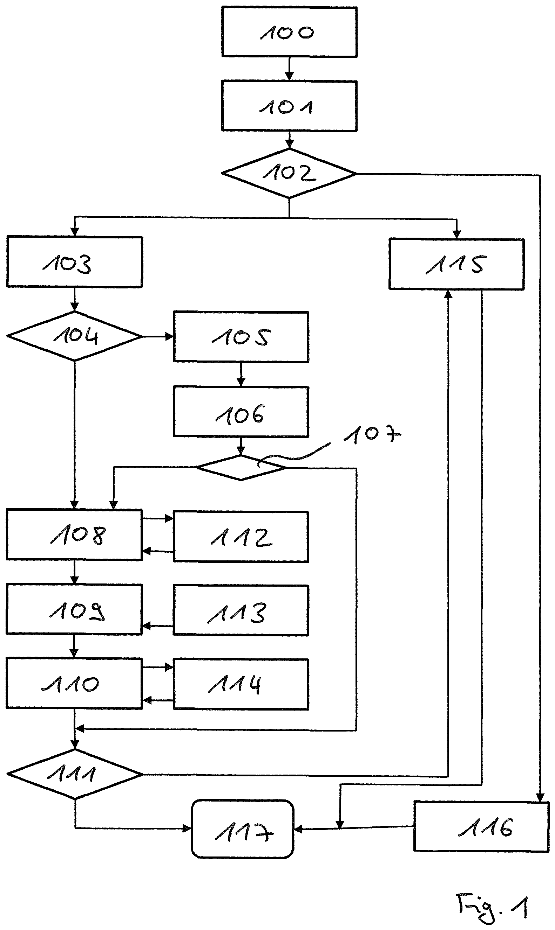

Fig. 1 zeigt ein Ablaufdiagramm, das einen Überblick über das Verfahren gibt. Ein Nutzer möchte in einem Webshop einen Bestellprozess 100 auslösen. Vor Abschluss der Bestellung gibt der Nutzer auf der Webseite des Shops verschiedene persönliche Daten an, beispielsweise, seinen Namen, seine Adresse und sein Geburtsdatum (Schritt 101). Anschließend wird in Schritt 102 geprüft, ob eine Authentifizierung und / oder eine Altersprüfung des Nutzers erforderlich ist. Dies kann beispielsweise der Fall sein, wenn im Warenkorb des Nutzers Waren vorliegen, die keine Jugendfreigabe haben.

Falls eine Authentifizierung bzw. Altersprüfung nicht erforderlich ist, wird der Bestellvorgang mit dem Schritt 116 fortgesetzt. Der Nutzer kann anschließend den Zahlungsprozess 117 einleiten und die Bestellung ist abgeschlossen.

Falls eine Verifizierung der Identität des Nutzers erforderlich ist, bestehen zwei Möglichkeiten. Der Nutzer kann einen Dienstleister einschalten, der die Identifizierung online durchführt (Schritt 103). Der Prozess kann von dem Nutzer mittels seines für die Bestellung verwendeten Computers (Tablets, Smartphones) durchgeführt werden. In diesem Fall wird zunächst geprüft, ob der Nutzer bereits ein Bestandskunde bei dem Dienstleister ist (Schritt 104). Hierfür werden die persönlichen Daten des Nutzers, welcher dieser auf der Webseite des Shops eingegeben hat, mit Daten in einer Datenbank des Dienstleisters verglichen. Falls eine Übereinstimmung gefunden wird, gilt der Nutzer als Bestandskunde (Schritt 105). Alternativ kann der Nutzer eine Nutzerkennnummer eingeben, die geprüft wird. Wenn der Nutzer als Bestandskunde erkannt wurde, wird von einem Server des Dienstleisters eine Transaktionsnummer (TAN) erzeugt und an den Computer des Nutzers (z.B. per E-Mail) und / oder an ein Telefon des Nutzes (z.B. per SMS) übermittelt. Der Nutzer kann die TAN auf der Webseite des Shops eingeben und hiermit seine Identität bestätigen (Schritt 106). Wenn die Eingabe der TAN erfolgreich war (Schritt 107), wird die Authentifizierung als erfolgreich angesehen (Schritt 111). Der Nutzer kann mit dem Bezahlprozess 117 die Bestellung abschließen.

Falls der Nutzer im Schritt 104 nicht als Bestandskunde erkannt wird oder die Eingabe der TAN im Schritt 107 nicht erfolgreich war, wird der Nutzer zu einer Identitätsprüfung 108 weitergeleitet. Es wird eine Videoverbindung zwischen dem Computer des Nutzers und einem Prüfserver aufgebaut, welche eine Bild- und Tonübertragung umfasst. Hierbei kann mittels des Prüfservers geprüft werden, ob eine erforderliche Videosoftware auf dem Computer des Nutzers installiert ist. Falls dies nicht der Fall sein sollte, kann eine Verknüpfung zum Herunterladen einer Videosoftware bereitgestellt werden (Schritt 112). Mit dem Prüfserver wird eine Vorgangsidentifikationsnummer erfasst, die den persönlichen Daten des Nutzers zugeordnet ist (Schritt 109). Die Vorgangsidentifikationsnummer kann auf dem Server des Dienstleisters erzeugt werden. Anschließend kann die Vorgangsidentifikationsnummer zum Computer des Nutzers übermittelt werden und dort beispielsweise in einem Browser dargestellt werden. Der Nutzer kann die Vorgangsidentifikationsnummer mittels der Videoverbindung einem den Prüfserver bedienenden Agenten mitteilen, welcher diese in den Prüfserver eingibt. Die Vorgangsidentifikationsnummer wird an den Server des Dienstleisters übermittelt. Der Server des Dienstleisters übermittelt im Gegenzug die persönlichen Daten des Nutzers, die der Vorgangsidentifikationsnummer zugeordnet sind, an den Prüfserver. Gegebenenfalls können die übermittelten persönlichen Daten des Nutzers ergänzt werden (Schritt 113).

Mittels der Videoverbindung wird ein Personalausweis des Nutzers erfasst und anschließend ausgewertet. Für die Auswertung wird ein Foto des Nutzers gemacht (Schritt 110). Die Auswertung kann einen Vergleich der übermittelten persönlichen Daten des Nutzers mit Angaben auf dem Personalausweis umfassen. Des Weiteren kann eine Prüfung von Sicherheitsmerkmalen des Personalausweises vorgesehen sein. Der Vergleich und / oder die Prüfung können automatisch mittels des Prüfservers durchgeführt wird (Schritt 114). Der Agent kann gegebenenfalls unterstützend eingreifen, indem er dem Nutzer Anweisungen gibt, wie dieser den Personalausweis vor die Kamera halten soll, damit die relevanten Informationen erfasst werden können. Das Ergebnis der Auswertung des Personalausweises wird zusammen mit der Vorgangsidentifikationsnummer in der Datenbank gespeichert. Wenn die Prüfung erfolgreich ist (Schritt 111), also die Identität des Nutzers bestätigt wurde, wird eine entsprechende Information an die Webseite des Shops übersandt. Der Nutzer kann anschließend mit dem Bezahlprozess 117 die Bestellung abschließen. Dieses Verfahren ermöglicht eine Authentifizierung des Nutzers innerhalb weniger Minuten und erfordert wenig Aufwand auf Seiten des Nutzers.

Falls sich der Nutzer gegen eine Nutzung des Dienstleisters entscheidet, bleibt ihm die bekannte Authentifizierung mittels der Post (Schritt 115). Nachdem dieses Verfahren erfolgreich abgeschlossen ist, kann der Nutzer ebenfalls den Bestellvorgang mittels des Bezahlprozesses 117 zu Ende bringen. In diesem Fall vergehen jedoch wenigstens einige Tage.

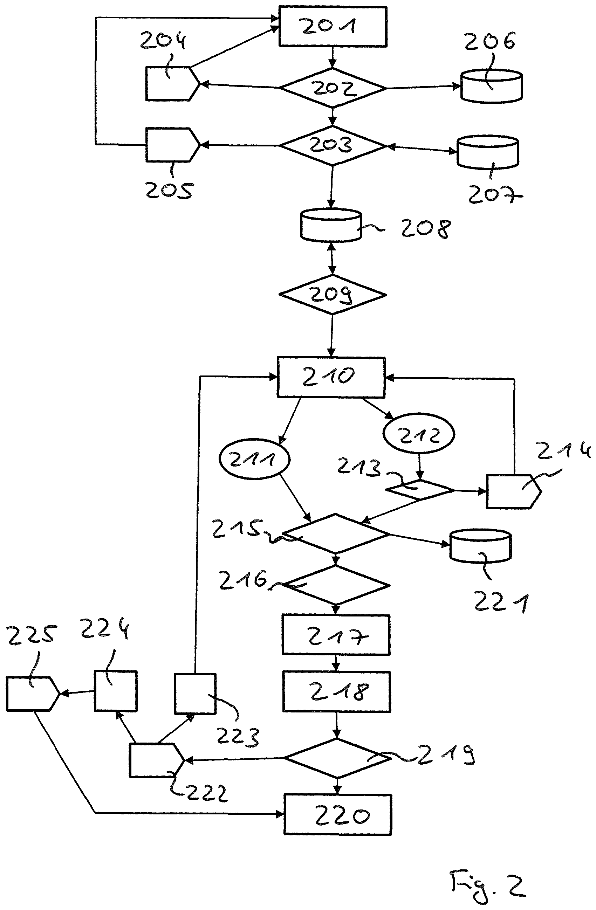

Fig. 2 zeigt einen detaillierten Ablaufplan für die Vorgänge beim Dienstleister. Von der Webseite des Shops kommt eine Anfrage zur Prüfung eines Nutzers an den Server des Dienstleisters (Schritt 201). Mit der Anfrage werden eine Anbieterkennnummer sowie persönliche Daten des Nutzers übermittelt, welche im Schritt 202 geprüft wird. Ergänzend hierzu können im Schritt 206 weitere Daten des Webshops (Anbieters) geprüft werden. Falls die Prüfung negativ ausgeht, erfolgt ein Ausstieg 204. Wenn die Anbieterkennnummer in der Datenbank vorhanden ist, wird geprüft, ob die übermittelten persönlichen Daten des Nutzers vorgegebenen Datenfeldern entsprechen (Schritt 203). Die Vorgaben wurden im Vorfeld von dem Anbieter erstellt und abgespeichert (Schritt 207). Es erfolgt ein Ausstieg 205, wenn die Vorgaben nicht erfüllt sind. Im Falle der Ausstiege 204 und 205 kann eine erneute Anfrage mit überarbeiteten Daten übersandt werden.

Wenn auch die Vorgaben erfüllt sind, wird ein neuer Vorgang in einer Datenbank angelegt (Schritt 208). Eine Vorgangsidentifikationsnummer wird erzeugt und übermittelt (Schritt 209). Des Weiteren wird ein Formular zur Identitätsprüfung des Nutzers aufgerufen. In dem Formular kann der Nutzer angeben, ob er bereits Bestandskunde bei dem Dienstleister ist oder nicht (Schritt 210).

Wenn angegeben wird, dass der Nutzer Bestandskunde ist, wird eine entsprechende Prüfung durchgeführt (Schritt 212). Wie bereits oben ausgeführt können hierfür die persönlichen Daten des Nutzers und / oder eine Kundenkennnummer geprüft werden (Schritt 213). Wenn die Prüfung erfolgreich ist, wird eine TAN erzeugt (Schritt 215) und an den Nutzer übersandt (Schritte 216, 217). Die TAN wird in einer Datenbank abgelegt (Schritt 221). Falls die Prüfung negativ ausgeht, erfolgt ein Ausstieg 214. Anschließend kann eine Eingabe in dem Formular erfolgen (Schritt 210). Die TAN wird in Schritt 218 in das Formular eingegeben und anschließend in Schritt 219 geprüft, beispielsweise mittels des Servers des Dienstleisters. Wenn die Prüfung erfolgreich ist, wird an die Webseite des Shops die Information übermittelt, dass der Nutzer registriert ist und die Identifikation erfolgreich war (Schritt 220).

Falls der Nutzer nicht Bestandskunde ist, wird die oben beschriebene Identitätsprüfung durchgeführt (Schritt 211). Nach erfolgreichem Abschluss wird die TAN erzeugt und übermittelt (Schritte 215, 216 und 217). Nach Eingabe und positiver Prüfung der TAN wird wiederum der Anbieter informiert (Schritte 218, 219 und 220).

Falls die TAN nicht positiv geprüft wird, erfolgt ein Ausstieg 222. Bei der Prüfung der TAN kann die Anzahl der Eingabeversuche gezählt werden. Wenn die Anzahl der Eingabeversuche kleiner oder gleich drei ist (Schritt 223), kehrt das Verfahren zum Schritt 210 zurück. Wenn die Anzahl der erfolglosen Eingaben größer als drei ist, erfolgt ein Ausstieg 225. Der Anbieter wird über das Fehlschlagen der Authentifizierung des Nutzers informiert (Schritt 220).

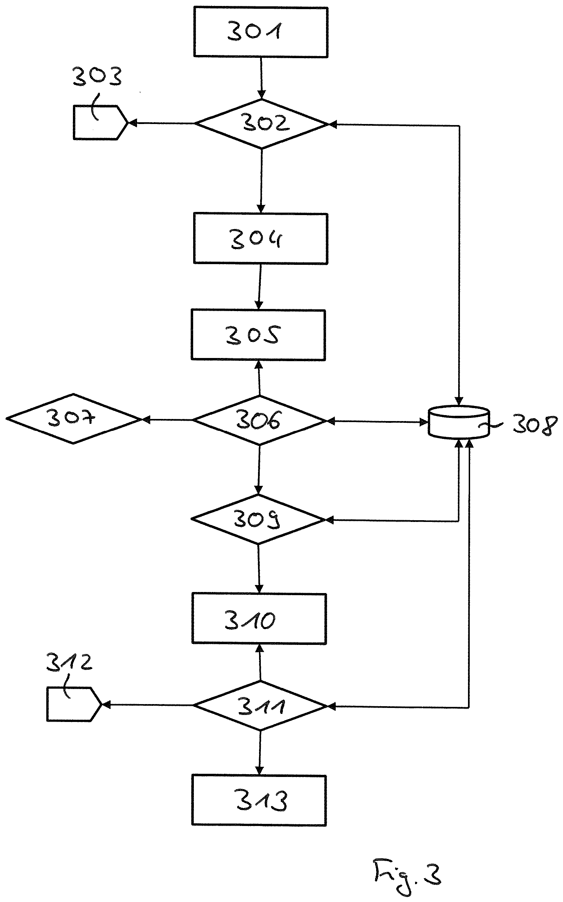

Fig. 3 zeigt den Ablauf für einen Bestandskunden. Von der Webseite eines Anbieters kommt eine Anfrage zur Prüfung eines Nutzers (Schritt 301). Eine ebenfalls übermittelt Anbieterkennnummer wird geprüft (Schritt 302). Hierbei wird auf eine Datenbank zugegriffen (Schritt 308). Bei negativem Ergebnis kommt es zu einem Ausstieg 303. Falls die Prüfung positiv ausfällt, wird eine Vorgangsidentifikationsnummer erzeugt und ein Formular für den Nutzer angegeben (Schritt 304). Der Nutzer kann seine Nutzerkennnummer in das Formular eingeben (Schritt 305). Die Nutzerkennnummer wird mittels der Datenbank geprüft (Schritt 306). Falls die Prüfung negativ ausfällt, kommt es zum Ausstieg. Alternativ kann die E-Mailadresse des Nutzers geprüft werden, um festzustellen, ob es sich um einen Bestandskunden handelt. Es kann dann eine Identitätsprüfung des Nutzers eingeleitet werden (Schritt 307). Bei positivem Ergebnis wird eine TAN erstellt und an den Nutzer übermittelt (Schritt 309). Die TAN wird der Vorgangsidentifikationsnummer zugeordnet. Die TAN wird auf der Webseite des Anbieters eingegeben (Schritt 310) und geprüft (Schritt 311). Wenn die Prüfung nicht erfolgreich ist, kommt es zum Ausstieg 312. Falls das Ergebnis der Prüfung positiv ist, wird eine entsprechende Information an den Anbieter übersandt (Schritt 313). Der Nutzer kann seine Handlungen beim Anbieter fortsetzen, beispielsweise einen Bestellvorgang abschließen.

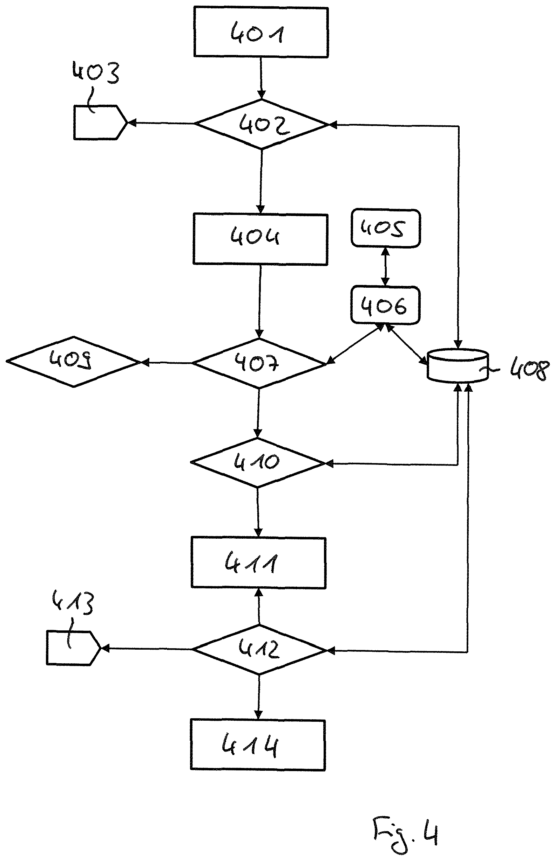

In Fig. 4 ist ein Ablauf für einen Neukunden dargestellt. Zunächst erfolgt wieder eine Anfrage von einem Anbieter zur Authentifizierung eines Nutzers (z.B. Betreiber eines Web-Shops) im Schritt 401. Eine Anbieterkennnummer wird geprüft und mit einer Datenbank verglichen (Schritt 402). Bei negativem Ergebnis erfolgt ein Ausstieg 403. Wenn die Prüfung erfolgreich ist, wird eine Vorgangsidentifikationsnummer erzeugt und ein Formular für den Nutzer bereitgestellt (Schritt 404). Anschließend erfolgt eine Prüfung der Identität des Nutzers (Schritt 407). Die Details der Identitätsprüfung sind bereits vorangehend erläutert worden. Hierbei kann auf die Datenbank 408 zugegriffen werden, wahlweise unter Verwendung eines CRM-Systems 406 und / oder einer Validierungssoftware 405. Wenn die Identität nicht festgestellt werden kann, erfolgt ein Ausstieg 409. Bei erfolgreicher Identitätsprüfung wird eine TAN erstellt und an den Nutzer übermittelt (Schritt 410). Nach Eingabe der TAN auf der Webseite des Anbieters (Schritt 411) wird diese geprüft (Schritt 412) Hierbei kann auf die Datenbank 408 zugegriffen werden, in welcher die TAN zusammen mit der zugeordneten Vorgangsidentifikationsnummer gespeichert ist. Bei negativem Ergebnis erfolgt wieder ein Ausstieg 413. Bei positivem Ergebnis der Prüfung kann der Nutzer weiter auf der Webseite des Anbieters agieren (Schritt 414).

Der Schutzumfang wird durch die Ansprüche definiert.

## Patentansprüche

1. Verfahren zum Auswerten eines Dokuments, mit folgenden Schritten:
- Bereitstellen einer Bilddatenverbindung zur Übertragung eines Bildsignals zwischen einer zweiten Datenverarbeitungseinrichtung, welche eine Bildaufnahmeeinrichtung aufweist, und einer ersten Datenverarbeitungseinrichtung,
- Übermitteln von Nutzerdaten an die erste Datenverarbeitungseinrichtung,
- Erfassen eines Dokuments mittels der Bildaufnahmeeinrichtung und Übertragen einer Abbildung des Dokuments mittels der Bilddatenverbindung an die erste Datenverarbeitungseinrichtung,
- Auswerten des Dokuments und
- Speichern des Ergebnisses der Auswertung mit den Nutzerdaten in einer Datenbank,
**gekennzeichnet durch** folgende Schritte:
- Erzeugen einer manipulationssicheren, den Nutzerdaten zugeordneten Vorgangsidentifikationsnummer, welche der eindeutigen Kennung eines Identifizierungsvorgangs für den Nutzer dient, in einer vierten Datenverarbeitungseinrichtung,
- Übermitteln der Vorgangsidentifikationsnummer von der vierten Datenverarbeitungseinrichtung an die zweite Datenverarbeitungseinrichtung, und
- Übermitteln der Vorgangsidentifikationsnummer von der zweiten Datenverarbeitungseinrichtung an die erste Datenverarbeitungseinrichtung, und
- Erfassen der Vorgangsidentifikationsnummer in der ersten Datenverarbeitungseinrichtung,
wobei das Ergebnis der Auswertung mit der Vorgangsidentifikationsnummer in der Datenbank gespeichert wird.

2. Verfahren nach Anspruch 1, weiterhin folgende Schritte umfassend:
- Übermitteln der Vorgangsidentifikationsnummer von der ersten Datenverarbeitungseinrichtung an die vierte Datenverarbeitungseinrichtung und
- Übermitteln der Nutzerdaten von der vierten Datenverarbeitungseinrichtung an die erste Datenverarbeitungseinrichtung in Erwiderung auf den Empfang der Vorgangsidentifikationsnummer.

3. Verfahren nach einem der vorangehenden Ansprüche, wobei vor dem Bereitstellen der Bilddatenverbindung geprüft wird, ob die zweite Datenverarbeitungseinrichtung eine Videosoftware zum Bereitstellen der Bilddatenverbindung aufweist, und, falls die Prüfung negativ ausfällt, ein Hyperlink bereitgestellt wird, mittels dem die Videosoftware heruntergeladen werden kann.

4. Verfahren nach einem der vorangehenden Ansprüche, wobei das Dokument automatisch mittels der ersten Datenverarbeitungseinrichtung oder manuell ausgewertet wird.

5. Verfahren nach einem der vorangehenden Ansprüche, wobei als Dokument ein Personenidentifikationsdokument ausgewertet wird.

6. Verfahren nach Anspruch 5, wobei Sicherheitsmerkmale des Personenidentifikationsdokuments ausgewertet werden, um die Echtheit des Personenidentifikationsdokuments zu prüfen.

7. Verfahren nach einem der vorangehenden Ansprüche, wobei eine Unterschrift auf dem Dokument ausgewertet wird.

8. Verfahren nach einem der vorangehenden Ansprüche, wobei zusammen mit dem Bildsignal ein Tonsignal übertragen wird.

9. Verfahren nach einem der vorangehenden Ansprüche, wobei das Bildsignal und / oder das Tonsignal wenigstens teilweise in der Datenbank gespeichert werden.

## Claims

1. A method for evaluating a document, comprising the following steps:
- providing an image data connection for transmitting an image signal between a second data processing device comprising an image capturing device and a first data processing device,
- communicating user data to the first data processing device,
- recording a document by means of the image capturing device and transmitting an image of the document by means of the image data connection to the first data processing device,
- evaluating the document, and
- storing the result of the evaluation together with the user data in a data base,
**characterised by** the following steps:
- generating a tamper-proof process identification number assigned to the user data in a fourth data processing device, the number serving as a unique identifier of an identification process for the user,
- communicating the process identification number from the fourth data processing device to the second data processing device, and
- communicating the process identification number from the second data processing device to the first data processing device, and
- recording the process identification number in the first data processing device,
wherein the result of the evaluation is stored together with the process identification number in the data base.

2. The method according to claim 1, further comprising the following steps:
- communicating the process identification number from the first data processing device to the fourth data processing device, and
- communicating the user data from the fourth data processing device to the first data processing device in response to the receipt of the process identification number.

3. The method according to one of the preceding claims, wherein prior to providing the image data connection it is checked, whether the second data processing device possesses video software for providing the image data connection, and in case the check proves to be negative, a hyperlink is provided by means of which the video software can be downloaded.

4. The method according to one of the preceding claims, wherein the document is automatically evaluated by means of the first data processing device or manually.

5. The method according to one of the preceding claims, wherein the document is evaluated as a person identification document.

6. The method according to claim 1, wherein security features of the person identification document are evaluated in order to check the authenticity of the person identification document.

7. The method according to one of the preceding claims, wherein a signature on the document is evaluated.

8. The method according to one of the preceding claims, wherein a sound signal is transmitted together with the image signal.

9. The method according to one of the preceding claims, wherein the image signal and/or the sound signal are stored at least partially in the data base.

## Revendications

1. Procédé d'évaluation d'un document, comportant les étapes suivantes consistant à:
- fournir une liaison de données d'image pour la transmission d'un signal d'image entre un deuxième dispositif de traitement de données, qui présente un dispositif de capture d'image, et un premier dispositif de traitement de données,
- transmettre des données d'utilisateur au premier dispositif de traitement de données,
- détecter un document au moyen du dispositif de capture d'image et transmettre une image du document au moyen de la liaison de données d'images au premier dispositif de traitement de données,
- évaluer le document et
- mémoriser le résultat de l'évaluation avec les données d'utilisateur dans une base de données,
**caractérisé par** les étapes suivantes consistant à:
- générer un numéro d'identification de processus coordonné aux données d'utilisateur, à manipulation sécurisée, qui sert à l'identification sans équivoque d'un processus d'identification pour l'utilisateur, dans un quatrième dispositif de traitement de données,
- transmettre le numéro d'identification de processus du quatrième dispositif de traitement de données au deuxième dispositif de traitement de données, et
- transmettre le numéro d'identification de processus du deuxième dispositif de traitement de données au premier dispositif de traitement de données et
- détecter le numéro d'identification de processus dans le premier dispositif de traitement de données,
dans lequel le résultat de l'évaluation est mémorisé avec le numéro d'identification de processus dans la base de données.

2. Procédé selon la revendication 1, comprenant en outre les étapes suivantes consistant à:
- transmettre le numéro d'identification de processus du premier dispositif de traitement de données au quatrième dispositif de traitement de données et
- transmettre les données d'utilisateur du quatrième dispositif de traitement de données au premier dispositif de traitement de données en réponse à la réception du numéro d'identification de processus.

3. Procédé selon une des revendications précédentes, dans lequel avant la fourniture de la liaison de données d'images on vérifie si le deuxième dispositif de traitement de données présente un logiciel vidéo pour fournir la liaison de données d'images et, au cas où la vérification s'avère négative, un hyperlien est fourni, au moyen duquel le logiciel vidéo peut être téléchargé.

4. Procédé selon une des revendications précédentes, dans lequel le document est évalué automatiquement au moyen du premier dispositif de traitement de données ou manuellement.

5. Procédé selon une des revendications précédentes, dans lequel comme document un document d'identification personnelle est évalué.

6. Procédé selon la revendication 5, dans lequel les caractéristiques de sécurité du document d'identification personnelle sont évaluées afin de vérifier l'authenticité du document d'identification personnelle.

7. Procédé selon une des revendications précédentes, dans lequel une signature sur le document est évaluée.

8. Procédé selon une des revendications précédentes, dans lequel conjointement au signai d'image un signai sonore est transmis.

9. Procédé selon une des revendications précédentes, dans lequel le signal d'image et/ou le signal sonore sont mémorisés au moins partiellement dans la base de données.
